# EUROPEAN PATENT SPECIFICATION

(11) **EP 4 348 182 B1**
(45) Date of publication and mention of the grant of the patent: **30.09.2026**
(21) Application number: 21763148.0
(22) Date of filing: 02.07.2021
(51) Int. Cl.: G01C 21/34

(54) **STATISTICAL DETERMINATION OF TRIP ITINERARY**
STATISTISCHE BESTIMMUNG DER REISEROUTE
DÉTERMINATION STATISTIQUE D'UN ITINÉRAIRE DE VOYAGE

(43) Date of publication of application: 10.04.2024
(73) Proprietor: MOOVIT APP GLOBAL LTD., 7403635 Ness Ziona (IL)
(72) Inventor: KARNIS, Simon, 7634322 Rehovot (IL); GALON, Binyamin, 9987500 Tzur Hadassah (IL); BEZALEL, Nir, 7646809 Rehovot (IL)
(74) Representative: Venner Shipley LLP
(86) International application number: PCT/IL2021/050823
(87) International publication number: WO 2023/275856

(56) References cited:
- EP-A2- 3 462 133
- US-A1- 2009 216 704
- US-A1- 2018 338 223

## Description

### BACKGROUND

Movement of people in today's modern environment is supported by an ever-increasing myriad of different modes of transportation that cooperate, compete, and intersect with each other to provide a modern traveler with means for moving between desired locations. As modern users may engage and use many different modes of transportation, keeping track of the use of the various modes of transportation and allocating funding, whether directly or indirectly via public taxation and/or personal payment, are complex, high-overhead tasks.

EP 3462133 describes an approach for determining probe data generated by a device travelling on a road segment is for pedestrian travel. A lane matching platform determines a speed of a probe point. The lane matching platform also determines a spatial distance of the probe point from a center line vector of a road segment. The lane matching platform also determines an allowed transport mode for the road segment. The lane matching platform further identifies the transport mode of the probe point based on the speed, the location of the probe point with respect to the center line, and the allowed transport mode. The transport mode, the allowed transport mode, or a combination thereof includes a car transport mode or a pedestrian transport mode.

### SUMMARY OF THE INVENTION

An aspect of an embodiment of the disclosure relates to providing a module for accurately and reliably tracking a user's travel route and use of available modes of transportation within the travel route based on location and/or motion ("LOCAMO") data collected by the user's mobile communication device during the user's progress along the travel route, even when the LOCAMO data is limited in availability and/or accuracy. The module, hereinafter also referred to as a statistical movement monitoring (SMOM) module.

A mobile communication device carried by a user may comprise LOCAMO trackers that provide LOCAMO data that may be used to determine location and/or motion of the user, which can be used to determine a travel route of the user carrying the mobile communication device, as well as usage of available modes of transportation by the user traveling along the travel route.

The LOCAMO trackers may include apparatuses and functionalities such as mobile phone triangulation of cell phone antennas, a global navigation satellite system (GNSS) receiver, and inertial measurement units (IMUs) that track velocity and acceleration of the mobile communication based on gyroscope and accelerometer data.

For convenience of presentation the process by which the SMOM module processes LOCAMO data to determine a user's travel route and use of available modes of transportation within the travel route may be referred as an "SMOM process".

The SMOS process enables tracking a user's use of available modes of transportation during a trip between an origin and a destination, wherein the process comprises generating a plurality of prospective trip plan (PTP) segments, the PTP segments being arranged into sequences that provide PTPs from the origin to the destination, each PTP segment being characterized by a transportation mode; collecting a travel data set comprising at least one travel measurement for each of a plurality of intermediary timepoints between the user leaving the origin and arriving at the destination; and determining a most probable time series of PTP segments traveled by the user based on an emissions matrix defining a probabilistic relationship between a PTP segment and a travel measurement, a transitions matrix characterizing a likelihood of the user transitioning from one PTP segment of the plurality of PTP segments to another, and the travel data set, wherein the emissions matrix characterizes the likelihood of observing the at least one travel measurement assuming that the user is traveling in a PTP segment of the plurality of PTP segments, wherein the transitions matrix is configured so that (i), (ii) or (iii) is met: (i) the likelihood of the user transitioning from one PTP segment of the plurality of PTP segments to a preceding PTP segment is zero; (ii) the likelihood of the user transitioning from one PTP segment of the plurality of PTP segments to a later PTP segment is responsive to a projected duration of the later PTP segment; (iii) the likelihood of the user transitioning from one PTP segment of the plurality of PTP segments to a later PTP segment is responsive to a projected initiation time of the later PTP segment compared to a projected initiation time of the one PTP segment.

A transportation mode may be any action or medium for achieving transportation, by way of example, a private transportation mode such as walking, bicycle, electric scooter, and a private automobile, or a public transportation mode such as a bus or a train. The transportation mode may be standing or waiting for a subsequent segment, by way of example waiting for a bus.

Additional features are described in the appended claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF FIGURES

Non-limiting examples of embodiments of the invention are described below with reference to figures attached hereto that are listed following this paragraph. Identical features that appear in more than one figure are generally labeled with a same label in all the figures in which they appear. A label labeling an icon representing a given feature of an embodiment of the invention in a figure may be used to reference the given feature. Dimensions of features shown in the figures are chosen for convenience and clarity of presentation and are not necessarily shown to scale.
Fig. 1 schematically shows a trip by a user being monitored and tracked by an SMOM process in accordance with an embodiment of the disclosure;
Fig. 2 shows a flowchart describing a SMOM process in accordance with an embodiment of the disclosure;
Fig. 3 schematically shows an overlay of PTPs generated by an SMOM process in accordance with an embodiment of the disclosure;
Fig. 4 shows a directed graph representing trip segments comprised in the respective PTPs schematically shown in Fig. 2B;
Fig. 5 schematically shows a crossover point detected between the PTPs schematically shown in Fig. 3, as detected by an SMOM process in accordance with an embodiment of the disclosure;
Fig. 6 shows a modified directed graph based on the directed graph shown in Fig. 3, the modification being based on the detection of the crossover point as schematically shown in Fig. 4;
Figs. 8A-8E schematically shows exemplary emission matrices in accordance with an embodiment of the disclosure;
Fig. 9 shows a directed graph representing a PTP, further showing transition probabilities of transitions between PTP segments, in accordance with an embodiment of the disclosure; and
Fig. 10 schematically shows a most probable time series of PTP segments based on the emission probabilities matrix and the transition probabilities matrix, as determined by an SMOM process in accordance with an embodiment of the disclosure.

### DETAILED DESCRIPTION

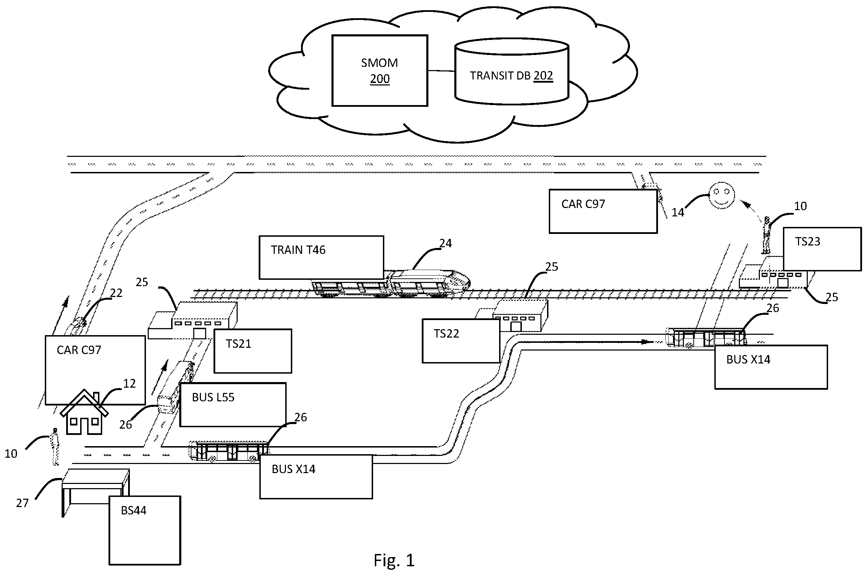

Reference is made to Fig. 1, which schematically shows various transportation modes available for use by passenger 10, who may be referred to here as "Simon", to travel from his home 12 to a destination 14. The available transportation modes may include cars 22, trains 24 that stop at train stations 25, and buses 26 that stop at bus stations 27 and train stations 25. Car 22 may be owned and operated by Simon, be a rental car, or be a taxi or ride-sharing vehicle that Simon rides in but is operated by a different driver.

A mobile communication device (not shown) carried by Simon comprise LOCAMO trackers that provide LOCAMO data that may be used to determine Simon's location and/or motion as he travels from his home 12 to destination 14. The LOCAMO trackers may include apparatuses and functionalities such as mobile phone triangulation of cell phone antennas, a global navigation satellite system (GNSS) receiver, and inertial measurement units (IMUs) that track velocity and acceleration of the mobile communication based on gyroscope and accelerometer data.

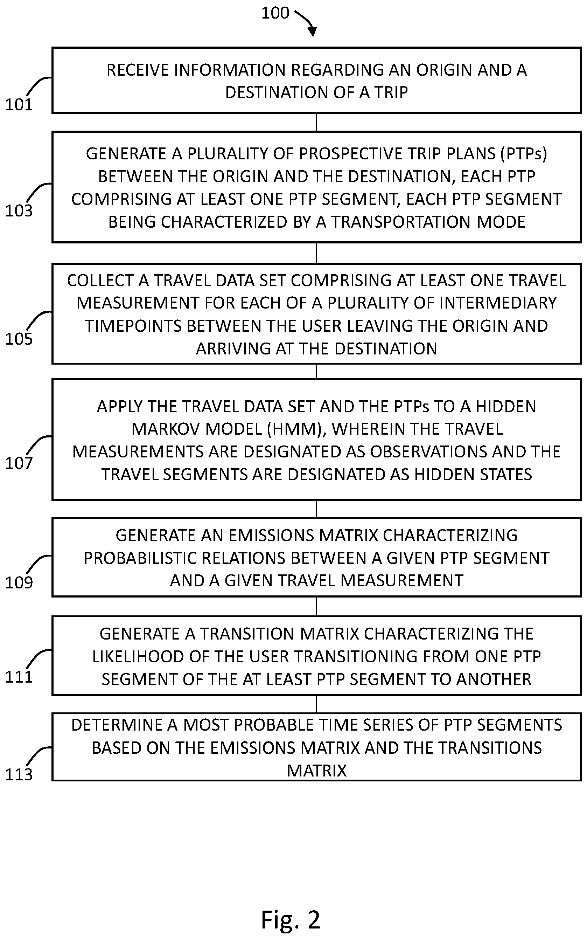

Reference is made to Fig. 2, which shows a flowchart describing a SMOM process 100 in accordance with an embodiment of the disclosure, in which a user's travel route and use of available modes of transportation within the travel route is determined based on a statistical analysis of the user's LOCAMO data collected while the user is traveling from a given origin to a destination. As described herein below, SMOM process 100 comprises generating a plurality of prospective trip plans (PTPs) between the origin and the destination, then determining which of the prospective PTPs, or a combination of the prospective PTPs, is statistically the most similar to the actual route taken by the user given the collected LOCAMO data.

SMOM process 100 may determine the travel route in real time, analyzing newly received LOCAMO data regarding the trip while the user is traveling. Alternatively, the SMOM system may perform the SMOM process retrospectively, after the user completes the trip.

Fig. 1 schematically shows an SMOM system 200 that comprises a hub, optionally a cloud-based hub, having at least a portion of the software and hardware, including a processor operating in accordance with a set of instructions and data stored in a memory, to perform SMOM process 100. SMOM system 200 may be configured to communicate with other devices and systems. SMOM system 200 may be configured to communicate with mobile communication devices carried by users to, by way of example, receive LOCAMO data and transmit back to the users results of the SMOM process. SMOM system 200 may comprise or have access to a transit database 202 that stores schedules and/or route histories of public transportation routes and individual transportation vehicles.

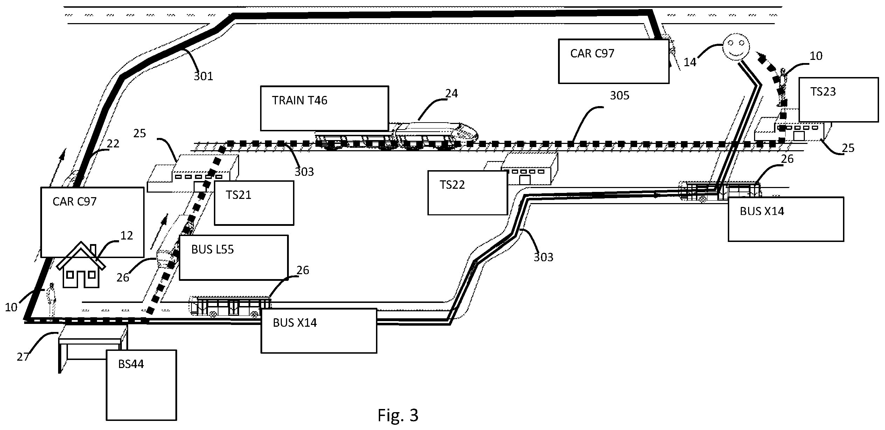

SMOM process 100 will be described with respect to blocks 101, 103, 105, 107, 109, 111, and 113 of the flowchart shown in Fig. 2, as well as with Figs. 3-7, Figs. 8A-8E, and Figs. 9-10.

In a block 101, SMOM process 100 may comprise receiving information regarding an origin and a destination of a trip. Optionally, Simon operates a travel app running on his mobile communication device to enter origin 12 and destination 14 of his trip, and the travel app transmits the origin and destination to SMOM system 200. The travel app may be, by way of example, a map app or a transit app that comprises a functionality to suggest prospective travel plans (PTPs) based on the entered origin and destination.

In a block 103, SMOM process 100 may comprise generating a plurality of prospective trip plans (PTPs) between the origin and the destination, each PTP comprising at least one PTP segment, each PTP segment being characterized by a transportation mode. A transportation mode may be any action or medium for achieving transportation. The transportation mode may be a private transportation mode such as walking, bicycle, electric scooter, and a private automobile, or a public transportation mode such as a bus or a train. The transportation mode may be standing or waiting for a subsequent segment, by way of example waiting for a bus.

An example of block 103 is shown in Fig. 3. Fig. 3 schematically shows by way of example three PTPs generated by SMOM system 200 based on the origin and destination entered into the travel app by Simon as he leaves his house 12 to travel to destination 14. A first PTP, in which Simon would travel from origin 12 to destination 14 via a car 22 is schematically indicated by a solid line 301. A second PTP, in which Simon would travel from origin 12 to destination 14 by riding a bus 26 then walking is schematically indicated by a double line 303. A third PTP, in which Simon would travel from origin 12 to destination 14 by riding a bus 26 then taking a train 24 then walking is schematically indicated by a dotted line 305.

In a PTP, the transportation mode associated with a given PTP segment may be a particular transportation vehicle. By way of example, first PTP 301 comprises a single vehicular PTP segment, in which Simon would travel from origin 12 to destination 14 in a particular ride-sharing vehicle, identified with a unique identifier "C97". First PTP 301 also comprises non-vehicular PTP segments including walking from origin 12 to car C97 to board it, and walking from C97 to destination 14 after disembarkation. Second PTP 303 comprises a single vehicular PTP segment, in which Simon would ride express bus having a unique identifier X14. Second PTP 303 also comprises non-vehicular PTP segments including walking from origin 12 to bus stop BS44, waiting for bus X14, and walking to destination 14 after disembarking from bus X14 at train station TS23. Third PTP 305 is a multimodal trip plan comprising two vehicular PTP segments: riding local bus L55 from bus stop BS44 to train station TS21; and riding train T46 from train station TS21 to train station TS23. Third PTP 305 also comprises non-vehicular PTP segments including walking from origin 12 to bus stop BS44, waiting for bus L55, waiting for the train at train station TS21, and walking to destination 14 after disembarking from train T46 at train station TS23.

Each PTP generated by SMOM system 200 may be stored as a feature vector comprising a set of features characterizing each PTP segment comprised in the PTP, by way of example: a segment initiation time, a segment duration, and a segment ending time; a geographical location; and a transportation mode. Examples of transportation modes include walking, waiting for ride, riding in a car, or riding in a public transportation vehicle such as a bus or a train. Other PTP segment features may include a vehicle identifier (in a case where the transportation mode involves vehicular transportation); a transportation service that provides the vehicle (in a case where the transportation mode involves riding in a vehicle operated by a transportation service); and a route identifier (in a case where the transportation service is a public transportation service with the vehicle traveling a predetermined route). The nature of the geographical position of a PTP segment may depend on the transportation mode. A transportation mode of "waiting" may be a point defined by a latitude-longitude coordinate ("lat-long"), a circle defined by a radius from the lat-long, or an architectural footprint of the train or bus stop where to waiting is done. In the case the PTP segment represents a non-stationary transportation mode such as walking or riding in a vehicle such as a car, bus, or a train, the shaped formed by a geographical position of a PTP segment may be a line defined by a set lat-longs that follow the route of the PTP segment.

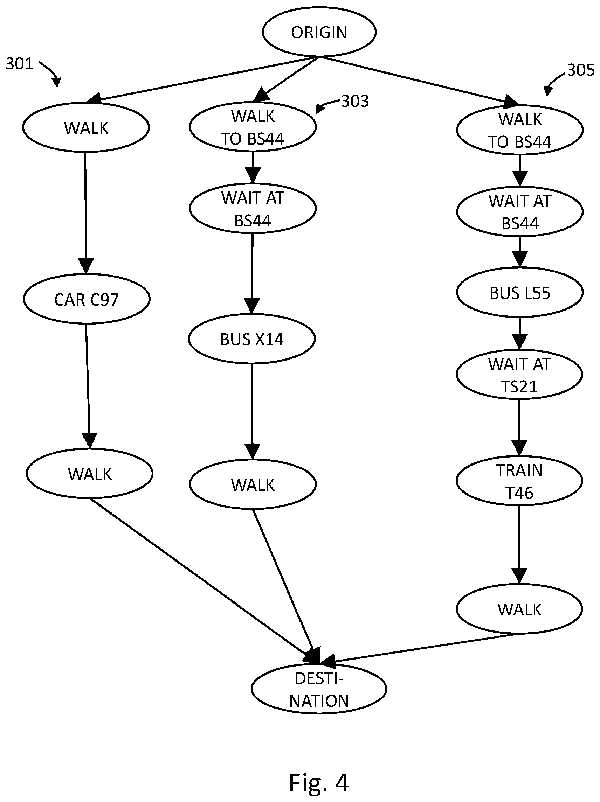

SMOM system 200 may represent the PTPs and the constituent PTP segments as a directed graph, in which each PTP segment of a PTP is represented as a node and the transition from one PTP segment to the next is represented as a directed edge. A representation of first PTP 301, second PTP 303, and third PTP 305 and their constituent PTP segments as a directed graph 308 is shown in Fig. 4.

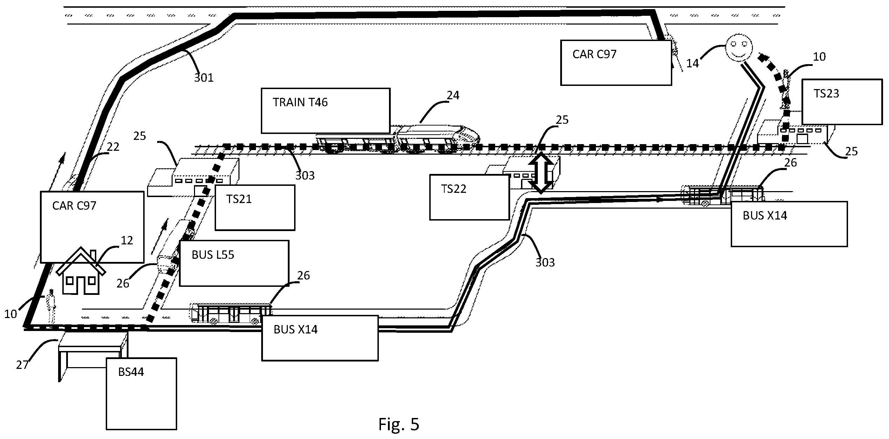

Reference is now made to Figs. 5-6. The generation of the PTPs may further comprise identifying one or more transfer locations between the generated PTPs, where a user would have the opportunity to transfer from a vehicular PTP segment comprised in one PTP to a different vehicular PTP segment comprised in another PTP. By way of example, a transit stop shared by respective public transportation segments of two different PTP may be designated as a transfer location between the two PTPs. Alternatively, two nearby transit stops that are separated by a distance or walking time that is below a predetermined threshold may be designated as a transfer location. Alternatively, a parking space or drop-off point at a transit stop and the transit spot itself may be determined to be a transfer location between a private car or ridesharing segment and a public transportation segment. By way of example, as shown in Fig. 5, the PTP segment of PTP 303 served by bus X14 and the PTP segment of PTP 305 served by train T46 are proximate to each other between train stations TS22 and TS23, and TS22 and TS23 both serve as common stops for both bus X14 and train T46. Based on the above information, SMOM system 200 may designate train stop TS22 to be a transfer location, which is schematically indicated in Fig. 5 as a double-sided block arrow 310.

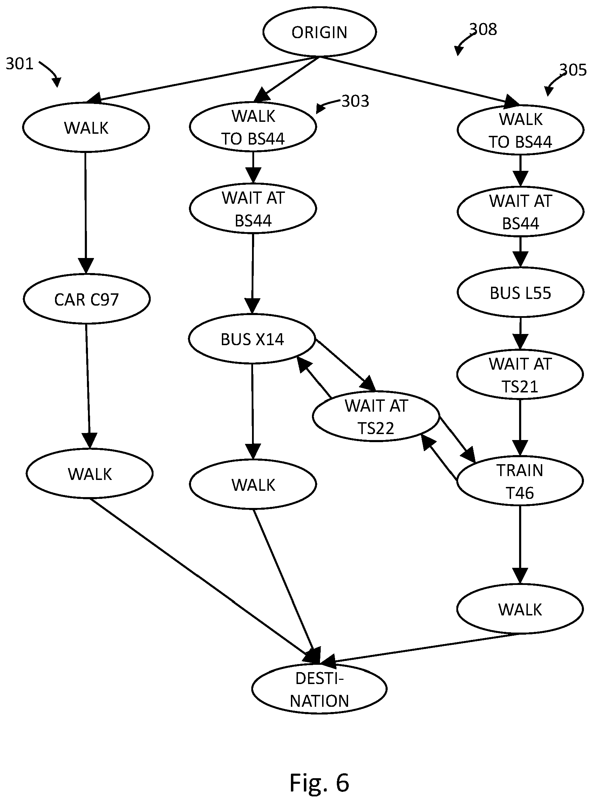

Designation of a transfer location between PTPs serves to increase the trip plans to be included in subsequent analysis. As shown in Fig. 6, designation of TS22 as transfer location 310 between PTP 303 and PTP 305 may be reflected as an updating of directed graph 308 representing the PTPs for evaluating Simon's trip between origin 12 and destination 14, which includes a new non-vehicular PTP segment representing the transfer location and represented as a new node "wait at TS22" that connects the vehicular PTP segments of "bus X14" and "train T46".

In a block 105, SMOM process 100 may comprise SMOM system 200 collecting a travel data set comprising at least one travel measurement for each of a plurality of intermediary timepoints between the user leaving the origin and arriving at the destination. A given travel measurement may be based on LOCAMO data received from a sensor comprised in the mobile communications device carried by Simon, such as a cell phone receiver, a GNSS receiver, an IMU, a Wi-Fi receiver, or a millimeter wavelength ("mmWave") antenna. A travel measurement may be a value or identifier derived from the LOCAMO data, such as geographic location (latitude-longitude ("lat-long"), speed, or movement mode. A travel measurement may be an indicator of proximity to a known landmark (such as a transit station or a restaurant) or to a vehicle operated by a given transit operator based on an SSID of a Wi-Fi access point detected by the Wi-Fi receiver comprised in Simon's mobile communication device.

The travel data set for a user's trip may comprise a time-resolved feature vector, which may be referred to as a trip feature vector, or TFV, providing a geotemporal record of a user's movement and location at a given timestamp during the trip. A TFV may have components *tfv*ᵢ 1≤i≤I, expressed as: $TFV = \left\{{tfv}_{1},t{fv}_{2},…,{tfv}_{I}\right\}$
where each {*tfv*ᵢ} comprise a timestamp or one of the set of travel measurements to be tracked at each timepoint in a trip. A time-resolved sequence of a plurality of TFVs may serve as a geotemporal record of the user's trip, which can be subsequently processed, as described hereinbelow, to determine which of the PTPs the user most likely followed in the trip given the sequence of travel measurements collected in the TFVs.

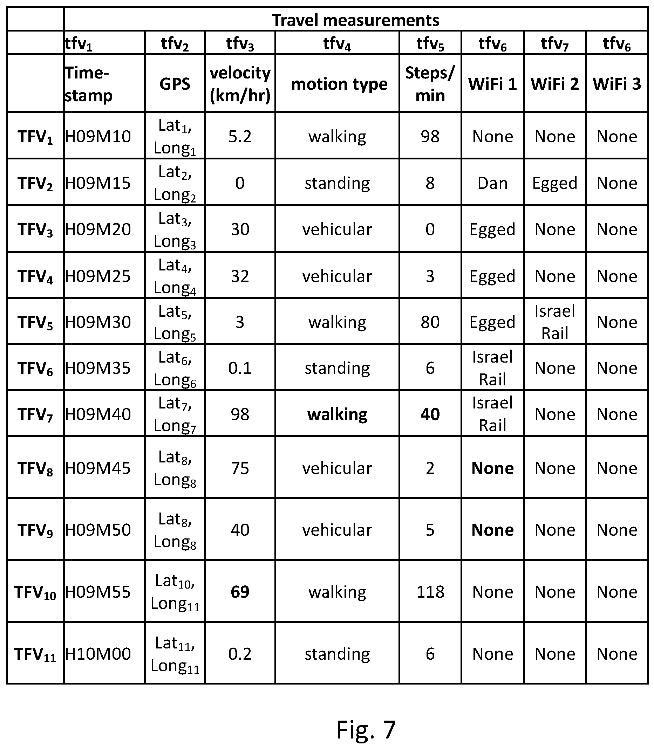

Reference is made to Fig. 7, showing an example set of TFVs, TFV₁ to TFV₁₁ in a table format, characterizing key steps along Simon's trip from origin 12 to destination 14 as shown in Fig. 1. Each TFV includes: a timestamp (tfv₁), GPS-based location (tfv₂), velocity optionally derived from GPS and/or IMU (tfv₃), motion type - standing, walking, or wheeled vehicular motion - optionally determined responsive to IMU signals (tfv₄); and steps/minute - optionally determined by a step counter function embedded in Simon's mobile communication device (tfv₅). Each MFV also includes up to three SSID signals (tfv₆ through tfv₈) received from one or more Wi-Fi routers detected by the mobile communication device. Other embodiments of SMOM process 100 may have more or fewer travel measurements collected as features in each TFV.

As shown in the example given in Fig. 7, a new TFV is collected by SMOM system 200 from Simon's mobile communication device at a collection interval of once every five minutes. The TFVs, upon being collected by SMOM system 200, may be stored in transit DB 202. Advantageously, SMOM process 100 is capable of reliably determining which PTP is being used by the user without overburdening computational and communication resources of the wireless communication device or SMOM system 200. In certain embodiments, the collection interval may be longer, by way of example once every 10 minutes. In certain embodiments, the collection interval may be shorter, by way of example once every 2 minutes or once every 1 minute.

The TFVs may be identified by an identifier of the mobile communication device from which SMOM 200 received the travel measurements, or the owner of the mobile communication device. The identifier may be an additional feature in the TFVs or saved as metadata. The identifier may be anonymized to protect the identity and privacy of the user. As a further privacy-protection measure, the TFVs may be deleted once they are processed to determined the most likely PTP traveled by the user.

SMOM process 100 may comprise applying the travel data set collected in block 105 and the PTPs generated in block 103 to a Hidden Markov Model (HMM). In a block 107, SMOM system 200 may designate the travel measurements as observations and designate the PTP segments of the PTPs as hidden states. Determining a sequence of hidden states based on a sequence of observations in accordance with an HMM may comprise the use of two constraints: an a set of emissions probabilities (which may be referred as an "emissions matrix" when presented or saved as a matrix) characterizing a probabilistic relationship between PTP PTP segments and travel measurements at a given timepoint; and a set of transition probabilities (which may be referred as a "transition matrix" when presented or saved as a matrix) characterizing the probability of a particular hidden state at a given point in time (time = t) given the hidden state at the immediately preceding timepoint (time = t - 1).

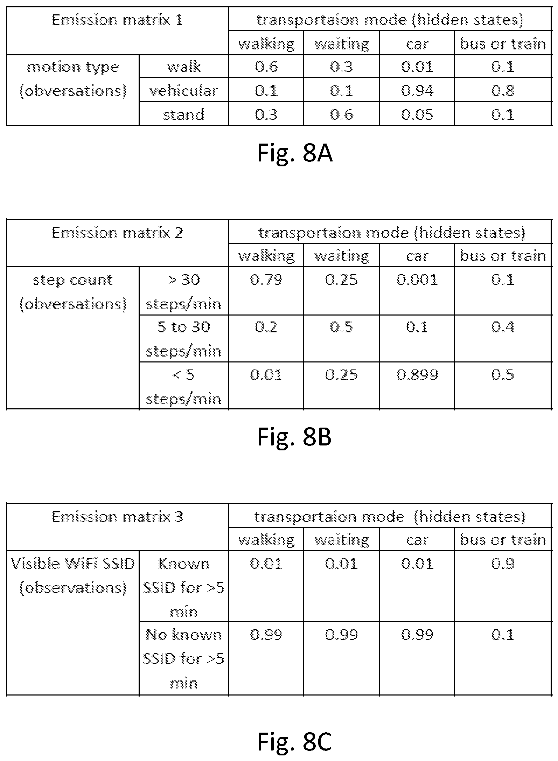

In a block 109, SMOM process 100 may comprise SMOM system 200 generating an emissions matrix. As shown in Fig. 7, travel measurements registered by Simon's smartphone during his trip from origin 12 to destination 14 included a timestamp (tfv₁), GPS-based location (tfv₂), velocity (tfv₃), motion type (tfv₄); and steps/minute (tfv₅). Figs. 8A-8E shows different example emission matrices that may be used individually or in combination along with a transitions matrix to determine a most likely route of a user between the origin and destination. Each of the example emission matrices describes how likely at a given point in time a certain observation, which may be a travel measurement based on one or more features comprised in the TFVs, would be made given the hidden state at the time, which may be a PTP segment generated in block 103.

Fig. 8A shows an example emission matrix describing a relationship between motion type (tfv₄) serving as observations and transportation modes of PTP segments serving as hidden states. The travel measurement of motion type (tfv₄) as shown by way of example in Fig. 7 can be one of the following: walking, standing, and vehicular motion. PTP segments as shown by way of example as nodes in Fig. 4 can be one of the following transportation modes: walk, wait, car, bus and train. The entries for each pair of an observation and a hidden state represents how likely the observation would be made given the hidden state at the time. Therefore, according to the emissions matrix shown in Fig. 8A, when Simon is engaging in a PTP segment of riding on a train or a bus, there is an 80% chance that the motion type detected by Simon's smartphone is "vehicular motion", a 10% chance that the motion type detected by the smartphone is "standing", and a 10% chance that the motion type detected by the smartphone is "walking". Alternatively, by way of example, when Simon in engaging in a PTP segment of riding in a car, there is a 94% chance that the motion type detected by Simon's smartphone is "vehicular motion", a 1% chance that the motion type detected by the smartphone is "standing", and a 5% chance that the motion type detected by the smartphone is "walking". Alternatively, by way of example, when Simon in engaging in a PTP segment of waiting for a ride, there is a 1% chance that the motion type detected by Simon's smartphone is "vehicular motion", a 60% chance that the motion type detected by the smartphone is "standing", and a 30% chance that the motion type detected by the smartphone is "walking".

Certain transportation modes of PTP segments may have characteristic step count rates. By way of example, a smartphone carried by a user that is walking would be expected to detect a substantially higher step count rate compared to when the user is waiting for a ride or riding in a car. However, a step count rate is not a perfectly reliable indicator of transportation mode. By way of example, a user walking around in a train to find a seat or going to the bathroom may result in a TFV for that time window indicating a relative high step count rate suggesting a transportation mode of "walking" even through a transportation mode of "train" would be more accurate.

Fig. 8B shows an example emission matrix describing a relationship between step count (tfv₅) serving as observations and transportation modes of PTP segments serving as hidden states. The travel measurement of step count (tfv₅) as shown by way of example in Fig. 7 may be expressed as an average step count sampled over a timespan of 2 min preceding the timestamp (tfv₁). PTP segments as shown by way of example as nodes in Fig. 4 can be one of the following transportation modes: walk, wait, car, bus and train. Therefore, according to the emissions matrix shown in Fig. 8B, when Simon is engaging in a PTP segment of riding on a train or a bus, there is a 10% chance that the mean step count detected by Simon's smartphone is more than 30 steps/min, a 40% chance that the mean step count detected by Simon's smartphone is between 5 steps/min and 30 steps/min, and a 50% chance that the mean step count detected by Simon's smartphone is less than 5 steps/min. By way of another example, when Simon in engaging in a PTP segment of waiting for a ride, there is a 25% chance that the mean step count detected by Simon's smartphone is more than 30 steps/min, a 50% chance that the mean step count detected by Simon's smartphone is between 5 steps/min and 30 steps/min, and a 25% chance that the mean step count detected by Simon's smartphone is less than 5 steps/min.

In many transportation systems, buses and trains are equipped with Wi-Fi routers to provide wireless communication for the passengers, and the SSID of the Wi-Fi routers typically refer to the transportation service operating the vehicle. By way of example, the Wi-Fi routers mounted onto buses operated the Egged Bus Company may have an SSID of "Egged", and the Wi-Fi routers mounted onto buses operated the Dan Bus Company may have an SSID of "DanBus". Transit DB 202 may store a list of SSIDs for Wi-Fi routers used by transportation services operating in the region served by SMOM system 200. SSIDs stored in Transit DB 202 and associated with known transportation services may be referred to herein as "known SSIDs". A smartphone carried by a user riding a transit vehicle such as a bus or a train would typically detect, stably over the duration of the ride, a known SSID identifying the transportation service operating the vehicle. By contrast, a smartphone carried by a user that is walking, waiting, or riding in a car would typically fail to detect a known SSID, with the exception of transient detections when, by way of example, a train stops at a train station and is temporarily near a user waiting for a different train, or a user driving a car passes a bus on the road. That being said, the presence or lack of a stable detection of a known SSID is not a totally reliable indicator of the transportation mode. By way of example, a user in a car stuck in traffic next to a bus or a user waiting at a train station platform where a train has made an extended stop due to technical problems would result in a false positive signal, with a TFV for that time window comprising as a feature the known SSID of the adjacent train or bus. Conversely, a user riding in a train or a bus with a faulty Wi-Fi router would result in a false negative signal, with a TFV for that time window indicating that no known SSID was stably detected.

Fig. 8C shows an example emission matrix describing a relationship between a stable detection of a known SSID (tfv₆) serving as an observation and transportation modes of PTP segments serving as hidden states. PTP segments as shown by way of example as nodes in Fig. 4 can be one of the following transportation modes: walk, wait, car, bus and train. According to the emissions matrix shown in Fig. 8C, when Simon is engaging in a PTP segment of riding on a train or a bus, there is a 90% chance that Simon's smartphone registered a stable (5 minute duration) connection with a Wi-Fi router having a known SSID. By contrast, when Simon is walking, waiting for a ride, or riding in a car, there is a 1% chance that Simon's smartphone registered a stable connection with a Wi-Fi router having known SSID.

Velocity may provide a probabilistic indication of the transportation mode and/or of which PTP segment a user in traveling along. By way of example, a TFV indicating that a user's mean velocity was close to 0 kilometers per hour (km/hr) may strongly correlate with the user walking or waiting for the next ride. However, such a low mean velocity may also be collected when the user is riding a bus, if the bus is stuck in traffic.

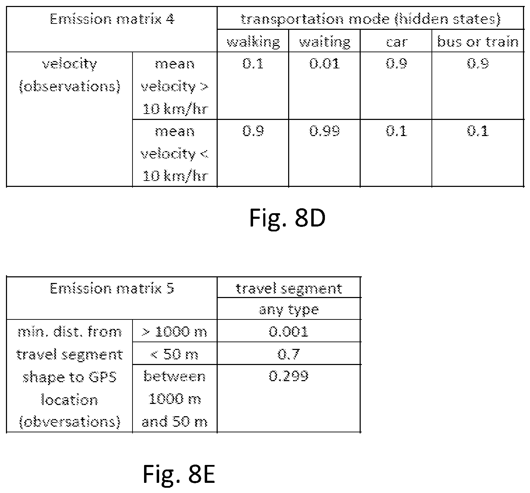

Fig. 8D shows an example emission matrix describing a relationship between a user's travel velocity (tfv₅) serving as observations and transportation modes of PTP segments serving as hidden states. The travel measurement of velocity (tfv₃) as shown by way of example in Fig. 7 may be expressed as a mean velocity sampled over a timespan of 5 min preceding the timestamp (tfv₁), and the observation may be categorized into two types: the mean velocity being above 10 km/hr or being below 10 km/hr. PTP segments may be one of the following transportation modes: walk, wait, car, and bus or train. According to the emissions matrix shown in Fig. 8D, when Simon is engaging in a PTP segment of riding on a train or a bus, or riding in a car, there is a 90% chance that the mean velocity detected by Simon's smartphone is more than 10 km/hr and a 10% chance that the mean velocity is less than 10 km/hr. Alternatively, when Simon is engaging in a PTP segment of walking, there is a 10% chance that the mean velocity detected by Simon's smartphone is more than 10 km/hr and a 90% chance that the mean velocity is less than 10 km/hr. Alternatively, when Simon is engaging in a PTP segment of waiting, there is a 1% chance that the mean velocity detected by Simon's smartphone is more than 10 km/hr and a 99% chance that the mean velocity is less than 10 km/hr.

GPS-based location may provide a probabilistic indication of which PTP segment a user in traveling along. By way of example, a TFV indicating that a user's GPS-based location was within 50 meters (m) of a geographical location of a PTP segment may strongly correlate with the user traveling along that PTP segment. However, GPS-based location is prone to substantial error, and the geographical position of PTP segments of different PTP in some cases may fully or partially overlap. The shape formed by a geographical position of a PTP segment characterized by a transportation mode of "waiting" may be a point defined by a latitude-longitude coordinate ("lat-long"), a circle defined by a radius from the lat-long, or an architectural footprint of the train or bus stop where to waiting is done. In the case the PTP segment represents a non-stationary transportation mode such as walking or riding in a vehicle such as a car, bus, or a train, the shaped formed by a geographical position of a PTP segment may be a line defined by a set lat-longs that follow the route of the PTP segment. The distance between the PTP segment and the GPS-based position of the smartphone may be calculated as a distance between the GPS-based user position and a position along the line that is closest to the GPS-based user position.

Fig. 8E shows an example emission matrix describing a relationship between a user's GPS position (tfv₂) serving as observations and individual PTP segments serving as hidden states. According to the emissions matrix shown in Fig. 8E, for a given PTP segment, there is a 0.1% chance that the GPS-based lat-long of Simon's smartphone is more than 1000 m from the geographical location of the PTP segment, a 60% chance that the GPS-based lat-long of Simon's smartphone is less than 50 m from the geographical location of the PTP segment, and a 29.9% chance that the GPS-based lat-long of Simon's smartphone is between 50 m and 1000 m from the geographical location of the PTP segment.

In a block 111, SMOM process 100 may comprise SMOM system 200 generating a transitions matrix characterizing the probability of a particular PTP segment (hidden state) at a given point in time, time = t, given the PTP segment at the immediately preceding timepoint, time = t - 1.

Referring back to Fig. 1, will be appreciated that there may be many transportation routes between origin 12 and destination 14 that are available to Simon in excess of the PTPs determined in block 103. However, accounting for all possible transportation routes place a heavy computational load on SMOM system 200. This problem is compounded by the fact that SMOM system 200 is expected to perform the SMOM process not only for Simon, but thousands of other users in parallel. Therefore, limiting the elements of the transitions matrix generated in block 111 to the PTP segments of the PTPs generated in block 103 advantageously allows for the SMOM process to be performed for users of an entire metropolitan, regional, or national transportation system without unduly sacrificing accuracy.

A typical transition matrix allows for transition between states to occur in both directions. By way of example, a transition matrix describing the probability of transitioning between hidden state A and hidden state B will typically include a set of four probabilities: for state A to remain as state A, for state B to remain as state B, for state A to transition to state B, and for state B to transition to state A. In an embodiment of the disclosure, the transition probabilities are configured so that the transitions from one PTP segment to another are possible only in a "downstream" direction, towards the destination as defined by the PTP. In other words, the probability of all PTP segment transitions in an "upstream" direction towards the origin may be configured to be zero. Limiting the scope of possible hidden state transitions to only downstream transitions as described above, which may be referred to as "eliminating upstream transitions", advantageously reduces the computational load imposed to the SMOM system in performing the SMOM process.

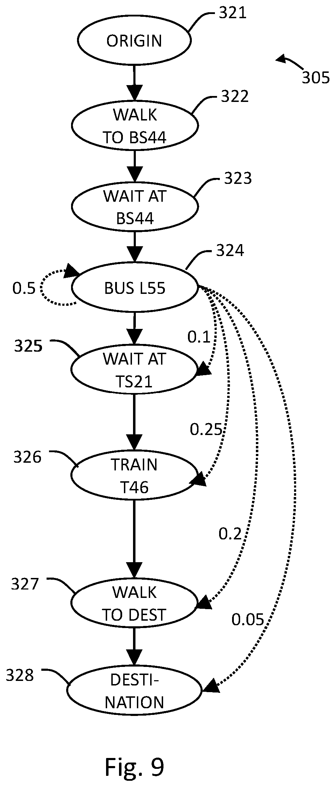

An example of eliminating upstream transitions is shown in Fig. 9, which shows a portion of the directed graph shown in Fig. 4 and Fig.6, in particular PTP 305. PTP 305 includes the following PTP segments for Simon to travel from the origin, schematically represented as node 321 to the destination, schematically represented as node 328: walk to bus station BS44 ("walk to BS44"; node 322); wait at bus station BS44 ("wait at BS 44"; node 323); ride on bus L55 ("bus L55"; node 324); wait at transit station TS 21 ("wait at TS21"; node 325); ride on train T46 ("train T46"; node 326); and walk to destination ("walk to dest"; node 327). The representation of PTP 305 has been annotated with example transition probabilities of the hidden state starting from node 324, representing the PTP segment of "ride on bus L55". Each transition having non-zero transition probabilities are schematically shown as a curved, dotted arrow. As shown in Fig. 9, the only transitions having non-zero probabilities are the transitions consistent with the origin-to-destination direction of the PTP. By way of example, the probability of the hidden state transitioning from riding on bus L55 (represented as node 324) to riding on train T46 (represented as node 326) is 0.25, and the probability of the hidden state staying as riding on bus L55 in the next time period in 0.5. However, the probability of transition from riding on bus L55 to riding on train T46 is zero, which is a direction of transition that is inconsistent the directionality of PTP 305, is zero.

The transition probabilities may be weighed to favor maintenance of the hidden state. By way of example as shown in Fig. 9, the transition probability for node 324 to transition to itself is 0.5.

The transition probabilities may be weighed to favor transition to a downstream PTP segment that is longer in duration and/or to an earlier initiation time. In such a configuration of transition probabilities, By way of example as shown in Fig. 9, the probability of the hidden state transitioning from riding on bus L55 (represented as node 324) to riding on train T46 (represented as node 326) is relatively high (p = 0.25) compared to the probability of the hidden state transitioning directly from node 324 to arriving at the destination (represented as node 328).

In a block 113, SMOM system 200 determines a most probable time series of travel segments based on the travel data set collected in block 105, the emissions matrix generated in block 109, and the transitions matrix generated in block 111. There are various methods known in the art to determine the most probable time series of hidden states based on a time series of observations, an emissions matrix and a transitions matrix. By way of example, a Viterbi method is employed.

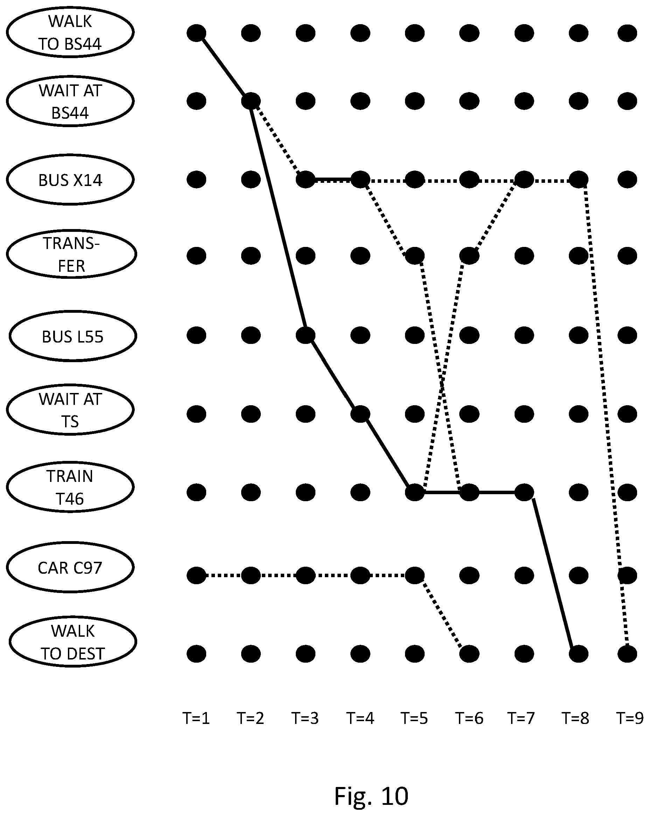

Fig. 10 schematically shows time series plot of a most probable time series of PTP segments based on the emission probabilities matrix and the transition probabilities matrix, as determined in block 113. In the time series plot, each row represents a PTP segment that could be utilized by Simon in accordance with the PTPs generated in block 103 including the added transfer location at TS22 as shown in Fig.5 and Fig.6. Each column of the time series plot represents a time point. The lines represent the PTPs, including the added plan going through the transfer point. The solid line represents the most probable time series as determined in block 113. The time series corresponds to PTP 305 as shown in Fig.3 and Fig.4. The dotted lines represents possible routes that were not selected as the most probable time series.

Descriptions of embodiments are provided by way of example and are not intended to limit the scope of the disclosure. The described embodiments comprise different features, not all of which are required in all embodiments of the disclosure. Some embodiments utilize only some of the features or possible combinations of the features. Variations of embodiments of the disclosure that are described, and embodiments of the disclosure comprising different combinations of features noted in the described embodiments, will occur to persons of the art. The scope of the disclosure is limited only by the claims.

## Claims

1. A method for tracking a user's use of available modes of transportation during a trip between an origin (12) and a destination (14), the method comprising:
generating (103) a plurality of prospective trip plan, PTP, segments, the PTP segments being arranged into sequences that provide PTPs from the origin to the destination, each PTP segment being **characterized by** a transportation mode;
collecting (105) a travel data set comprising at least one travel measurement for each of a plurality of intermediary timepoints between the user leaving the origin and arriving at the destination; and
determining (113) a most probable time series of PTP segments traveled by the user based on an emissions matrix defining a probabilistic relationship between a PTP segment and a travel measurement, a transitions matrix characterizing a likelihood of the user transitioning from one PTP segment of the plurality of PTP segments to another, and the travel data set,
wherein the emissions matrix characterizes the likelihood of observing the at least one travel measurement assuming that the user is traveling in a PTP segment of the plurality of PTP segments,
wherein the transitions matrix is configured so that (i), (ii) or (iii) is met:
(i) the likelihood of the user transitioning from one PTP segment of the plurality of PTP segments to a preceding PTP segment is zero;
(ii) the likelihood of the user transitioning from one PTP segment of the plurality of PTP segments to a later PTP segment is responsive to a projected duration of the later PTP segment;
(iii) the likelihood of the user transitioning from one PTP segment of the plurality of PTP segments to a later PTP segment is responsive to a projected initiation time of the later PTP segment compared to a projected initiation time of the one PTP segment.

2. The method according to claim 1, wherein the transportation mode is selected from the group consisting of walking, waiting, and riding on a vehicle.

3. The method according to claim 2, wherein the vehicle is a public transportation vehicle.

4. The method according to any one of the preceding claims, wherein the at least one travel measurement is based on measurements taken by sensors mounted on a smartphone carried by the user.

5. The method according to any one of the preceding claims, wherein the at least one travel measurement is based on one or a combination of two or more of the following: a geographical location; a velocity; a motion type as determined by an inertial measurement unit; a step count; and an identity of a nearby Wi-Fi router.

6. The method according to any one of the preceding claims, wherein the emissions matrix characterizes the likelihood of observing a motion type as determined responsive to an IMU mounted on a smartphone carried by the user, assuming that the user is traveling in a PTP segment of the plurality of PTP segments.

7. The method according to any one of the preceding claims, wherein the emissions matrix characterizes the likelihood of observing a step count as determined based on an IMU mounted on a smartphone carried by the user within a predetermined range, assuming that the user is traveling in a given PTP segment of the plurality of PTP segments.

8. The method according to any one of the preceding claims, wherein the emissions matrix characterizes the likelihood of the smartphone carried by the user maintaining a stable connection with a Wi-Fi router having an SSID associated with a transportation service, assuming that the user is traveling in a given PTP segment of plurality of PTP segments.

9. The method according to any one of the preceding claims, wherein the emissions matrix characterizes the likelihood of observing a velocity of the user as determined by a smartphone carried by the user within a predetermined range, assuming that the user is traveling in a given PTP segment of the plurality of PTP segments.

10. The method according to any one of the preceding claims, wherein the emissions matrix characterizes the likelihood of the GPS-based location of a smartphone carried by the user being within a predetermined distance range from the geographical location of a PTP segment of the plurality of PTP segments, assuming that the user is traveling in the PTP segment.

## Patentansprüche

1. Verfahren zum Nachverfolgen der Verwendung von verfügbaren Beförderungsarten durch einen Benutzer während einer Reise zwischen einem Ursprung (12) und einem Ziel (14), wobei das Verfahren Folgendes umfasst:
Generieren (103) einer Vielzahl von Segmenten eines voraussichtlichen Reiseplans, PTP-Segmenten, wobei die PTP-Segmente in Sequenzen angeordnet sind, die PTPs vom Ursprung zum Ziel bereitstellen, wobei jedes PTP-Segment durch eine Beförderungsart gekennzeichnet ist;
Sammeln (105) eines Fortbewegungsdatensatzes, der mindestens eine Fortbewegungsmessung für jeden einer Vielzahl von Zwischenzeitpunkten dazwischen, dass der Benutzer den Ursprung verlässt und am Ziel ankommt, umfasst; und
Bestimmen (113) einer wahrscheinlichsten Zeitreihe von PTP-Segmenten, auf denen sich der Benutzer fortbewegt, basierend auf einer Emissionsmatrix, die eine probabilistische Beziehung zwischen einem PTP-Segment und einer Fortbewegungsmessung definiert, einer Übergangsmatrix, die eine Wahrscheinlichkeit kennzeichnet, dass der Benutzer von einem PTP-Segment der Vielzahl von PTP-Segmenten zu einem anderen übergeht, und dem Fortbewegungsdatensatz,
wobei die Emissionsmatrix die Wahrscheinlichkeit, dass die mindestens eine Fortbewegungsmessung beobachtet wird, unter der Annahme kennzeichnet, dass sich der Benutzer in einem PTP-Segment der Vielzahl von PTP-Segmenten fortbewegt,
wobei die Übergangsmatrix so konfiguriert ist, dass (i), (ii) oder (iii) erfüllt ist:
(i) die Wahrscheinlichkeit, dass der Benutzer von einem PTP-Segment der Vielzahl von PTP-Segmenten zu einem vorhergehenden PTP-Segment übergeht, beträgt null;
(ii) die Wahrscheinlichkeit, dass der Benutzer von einem PTP-Segment der Vielzahl von PTP-Segmenten zu einem späteren PTP-Segment übergeht, reagiert auf eine prognostizierte Dauer des späteren PTP-Segments;
(iii) die Wahrscheinlichkeit, dass der Benutzer von einem PTP-Segment der Vielzahl von PTP-Segmenten zu einem späteren PTP-Segment übergeht, reagiert auf eine prognostizierte Initiierungszeit des späteren PTP-Segments im Vergleich zu einer prognostizierten Initiierungszeit des einen PTP-Segments.

2. Verfahren nach Anspruch 1, wobei die Beförderungsart ausgewählt ist aus der Gruppe bestehend aus Gehen, Warten und Fahren in einem Fahrzeug.

3. Verfahren nach Anspruch 2, wobei das Fahrzeug ein öffentliches Beförderungsfahrzeug ist.

4. Verfahren nach einem der vorhergehenden Ansprüche, wobei die mindestens eine Fortbewegungsmessung auf Messungen basiert, die durch Sensoren vorgenommen werden, die an einem durch den Benutzer getragenen Smartphone montiert sind.

5. Verfahren nach einem der vorhergehenden Ansprüche, wobei die mindestens eine Fortbewegungsmessung auf einem oder einer Kombination aus zwei oder mehr der Folgenden basiert: einem geografischen Standort; einer Geschwindigkeit; einem Bewegungstyp, wie durch eine inertiale Messeinheit bestimmt; einer Schrittzahl; und einer Identität eines nahegelegenen Wi-Fi-Routers.

6. Verfahren nach einem der vorhergehenden Ansprüche, wobei die Emissionsmatrix die Wahrscheinlichkeit, dass ein Bewegungstyp, wie als Reaktion auf eine an einem durch den Benutzer getragenen Smartphone montierte IMU bestimmt, beobachtet wird, unter der Annahme kennzeichnet, dass sich der Benutzer in einem PTP-Segment der Vielzahl von PTP-Segmenten fortbewegt.

7. Verfahren nach einem der vorhergehenden Ansprüche, wobei die Emissionsmatrix die Wahrscheinlichkeit, dass eine Schrittzahl, wie basierend auf einer an einem durch den Benutzer getragenen Smartphone montierten IMU bestimmt, innerhalb eines vorbestimmten Bereichs beobachtet wird, unter der Annahme kennzeichnet, dass sich der Benutzer in einem gegebenen PTP-Segment der Vielzahl von PTP-Segmenten fortbewegt.

8. Verfahren nach einem der vorhergehenden Ansprüche, wobei die Emissionsmatrix die Wahrscheinlichkeit, dass das durch den Benutzer getragene Smartphone eine stabile Verbindung mit einem Wi-Fi-Router aufrechterhält, der eine SSID aufweist, die einem Beförderungsdienst zugeordnet ist, unter der Annahme kennzeichnet, dass sich der Benutzer in einem gegebenen PTP-Segment von Vielzahl von PTP-Segmenten fortbewegt.

9. Verfahren nach einem der vorhergehenden Ansprüche, wobei die Emissionsmatrix die Wahrscheinlichkeit, dass eine Geschwindigkeit des Benutzers, wie durch ein durch den Benutzer getragenes Smartphone bestimmt, innerhalb eines vorbestimmten Bereichs beobachtet wird, unter der Annahme kennzeichnet, dass sich der Benutzer in einem gegebenen PTP-Segment der Vielzahl von PTP-Segmenten fortbewegt.

10. Verfahren nach einem der vorhergehenden Ansprüche, wobei die Emissionsmatrix die Wahrscheinlichkeit, dass sich der GPS-basierte Standort eines durch den Benutzer getragenen Smartphones innerhalb eines vorbestimmten Entfernungsbereichs von dem geografischen Standort eines PTP-Segments der Vielzahl von PTP-Segmenten befindet, unter der Annahme kennzeichnet, dass sich der Benutzer in dem PTP-Segment fortbewegt.

## Revendications

1. Procédé permettant de suivre l'utilisation par un utilisateur de moyens de transport disponibles pendant un voyage entre une origine (12) et une destination (14), le procédé comprenant :
la génération (103) d'une pluralité de segments de plan de voyage prospectif, PTP, les segments de PTP étant agencés en séquences qui fournissent des PTP à partir de l'origine à la destination, chaque segment de PTP étant **caractérisé par** un moyen de transport ;
la collecte (105) d'un ensemble de données de voyage comprenant au moins une mesure de voyage pour chacun d'une pluralité de points temporels intermédiaires entre le départ de l'origine par l'utilisateur et son arrivée à la destination ; et
la détermination (113) d'une série temporelle la plus probable de segments de PTP où a voyagé l'utilisateur sur la base d'une matrice d'émissions définissant une relation probabiliste entre un segment de PTP et une mesure de voyage, d'une matrice de transitions caractérisant une probabilité de transition par l'utilisateur à partir d'un segment de PTP de la pluralité de segments de PTP à un autre, et de l'ensemble de données de voyage,
dans lequel la matrice d'émissions caractérise la probabilité d'observer l'au moins une mesure de voyage en supposant que l'utilisateur voyage dans un segment de PTP de la pluralité de segments de PTP,
dans lequel la matrice de transitions est configurée afin que (i), (ii) ou (iii) soit satisfaite :
(i) la probabilité de la transition par l'utilisateur à partir d'un segment de PTP de la pluralité de segments de PTP à un segment de PTP précédent est nulle ;
(ii) la probabilité de la transition par l'utilisateur à partir d'un segment de PTP de la pluralité de segments de PTP à un segment de PTP ultérieur est en réponse à une durée projetée du segment de PTP ultérieur ;
(iii) la probabilité de la transition par l'utilisateur à partir d'un segment de PTP de la pluralité de segments de PTP à un segment de PTP ultérieur est en réponse à un temps de lancement projeté du segment de PTP ultérieur par rapport à un temps de lancement projeté du segment de PTP.

2. Procédé selon la revendication 1, dans lequel le moyen de transport est choisi dans le groupe constitué par la marche, l'attente et la montée sur un véhicule.

3. Procédé selon la revendication 2, dans lequel le véhicule est un véhicule de transport en commun.

4. Procédé selon l'une quelconque des revendications précédentes, dans lequel l'au moins une mesure de voyage est basée sur des mesures prises par des capteurs montés sur un smartphone porté par l'utilisateur.

5. Procédé selon l'une quelconque des revendications précédentes, dans lequel l'au moins une mesure de voyage est basée sur l'un, ou sur une combinaison de deux ou plus des suivants : un emplacement géographique ; une vitesse ; un type de mouvement tel que déterminé par une unité de mesure inertielle ; un nombre de pas ; et une identité d'un routeur Wi-Fi à proximité.

6. Procédé selon l'une quelconque des revendications précédentes, dans lequel la matrice d'émissions caractérise la probabilité d'observer un type de mouvement tel que déterminé en réponse à une IMU montée sur un smartphone porté par l'utilisateur, en supposant que l'utilisateur voyage dans un segment de PTP de la pluralité de segments de PTP.

7. Procédé selon l'une quelconque des revendications précédentes, dans lequel la matrice d'émissions caractérise la probabilité d'observer un nombre de pas tel que déterminé sur la base d'une IMU montée sur un smartphone porté par l'utilisateur dans les limites d'une portée prédéterminée, en supposant que l'utilisateur voyage dans un segment de PTP donné de la pluralité de segments de PTP.

8. Procédé selon l'une quelconque des revendications précédentes, dans lequel la matrice d'émissions caractérise la probabilité que le smartphone porté par l'utilisateur maintienne une connexion stable avec un routeur Wi-Fi présentant un SSID associé à un service de transport, en supposant que l'utilisateur voyage dans un segment de PTP donné d'une pluralité de segments de PTP.

9. Procédé selon l'une quelconque des revendications précédentes, dans lequel la matrice d'émissions caractérise la probabilité d'observer une vitesse de l'utilisateur telle que déterminée par un smartphone porté par l'utilisateur dans les limites d'une portée prédéterminée, en supposant que l'utilisateur voyage dans un segment de PTP donné de la pluralité de segments de PTP.

10. Procédé selon l'une quelconque des revendications précédentes, dans lequel la matrice d'émissions caractérise la probabilité que l'emplacement basé sur GPS d'un smartphone porté par l'utilisateur soit dans les limites d'une portée de distance prédéterminée de l'emplacement géographique d'un segment de PTP de la pluralité de segments de PTP, en supposant que l'utilisateur voyage dans le segment de PTP.
